# EUROPEAN PATENT SPECIFICATION

(11) **EP 3 275 242 B1**
(45) Date of publication and mention of the grant of the patent: **17.01.2024**
(21) Application number: 15713412.3
(22) Date of filing: 23.03.2015
(51) Int. Cl.: H04W 36/08, H04W 36/00

(54) **DETERMINATION OF A RE-ESTABLISHMENT CELL**
BESTIMMUNG EINER WIEDERHERSTELLUNGSZELLE
DETERMINATION D'UNE CELLULE DE RÉETABLISSEMENT

(43) Date of publication of application: 31.01.2018
(73) Proprietor: Nokia Solutions and Networks Oy, 02610 Espoo (FI)
(72) Inventor: WEGMANN, Bernhard, 83607 Holzkirchen (DE); KORDYBACH, Krzysztof, 24-100 Pulawy (PL); WOLDEMEDHIN, Dereje, 80333 Munich (DE); WALDHAUSER, Richard, 81249 Munich (DE)
(74) Representative: Nokia EPO representatives
(86) International application number: PCT/EP2015/056078
(87) International publication number: WO 2016/150478

(56) References cited:
- WO-A1-2012/146276
- WO-A1-2013/020604
- WO-A1-2015/005729
- WO-A1-2015/036017

## Description

The handover of a communication device from one cell to another cell is an important part of the operation of a cellular radio access network.

One conventional technique involves identifying a most preferred target cell and one or more alternative cells for the communication device based on measurements made at the communication device, sending one or more handover requests from a current serving node to the one or more nodes operating those cells, receiving feedback from those nodes about the cells identified in the one or more handover requests, and sending handover command(s) to the communication device based on the feedback.

The inventors for the present application have identified inefficiencies with this process in some advanced networks, and have identified the challenge of enhancing the handover process. WO2012/146276 describes a technique comprising including admission control information in a handover request acknowledgment. WO2013/020604 describes a technique comprising reporting detection of rapid handover as a key performance indicator (KPI). WO 2015/005729 A1 discloses a handover request sent to a target cell, the handover request being for a cell that will be split or merge. The target cell responds by indicating the identity of the new cell after the cell or merge. After a timer elapsed, the source cell sends a handover request to the new cell.

There is hereby provided a method according to claim 1, a second node according to claim 2 and a computer program product according to claim 3.

Embodiments of the present invention are described in detail hereunder, by way of example only, with reference to the accompanying drawings, in which:
Figure 1 illustrates an example of the movement of a communication device from an area covered by a cell B operated by one access node to an area covered by a cell A operated by another access node;
Figure 2 illustrates different examples of coverage areas for replacement cells for cell A in Figure 1.
Figure 3 schematically illustrates an example of apparatus for use at the communication device of Figure 1;
Figure 4 schematically illustrates an example of apparatus for use at the access nodes of Figure 1;
Figure 5 illustrates one example of operations at a UE and source/target access nodes according to one embodiment of the invention;
Figure 6 illustrates one examples of operations at a source access node according to one embodiment of the invention;
Figure 7 illustrates one examples of operations at a target access node according to one embodiment of the invention; and
Figure 8 illustrates one example of operations at a UE mentioned in the operations of Figures 6 and 7 at the source and target access nodes.

One embodiment is described below, by way of example only, for the example of a handover in a LTE (Long Term Evolution) network involving cell splitting/merging, but the same kind of technique is also applicable to other types of network.

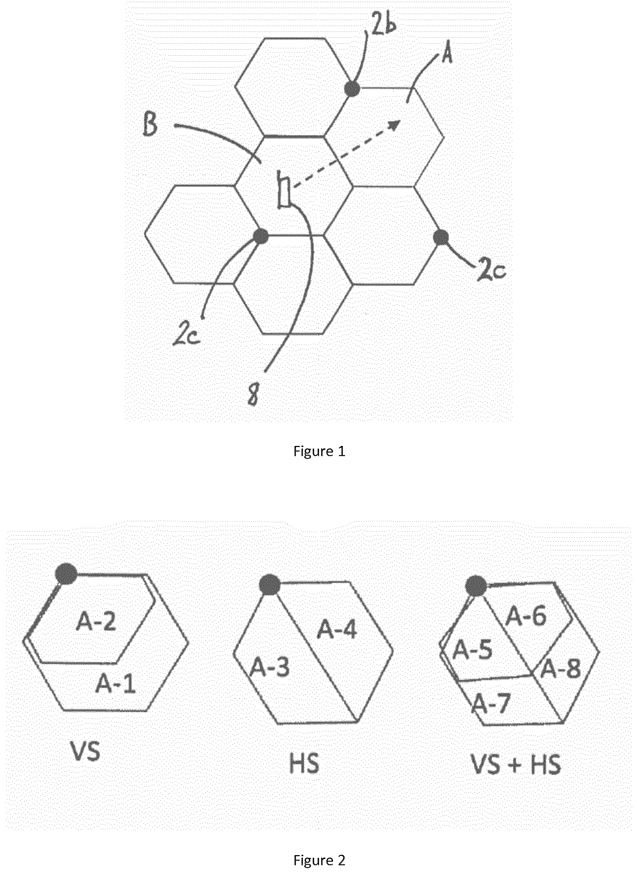

Figure 1 schematically illustrates part of a cellular network. Figure 1 only shows three access nodes (eNodeBs) 2a, 2b and 2c; but a typical cellular radio access network will comprise thousands of access nodes, each operating a respective cell or group of cells, and collectively providing a wide, continuous coverage area.

The hexagonal areas in Figure 1 schematically present the coverage areas of individual cells. In reality, there is substantial overlap of cell coverage areas at their edges in order to facilitate smooth handover between cells. The shape of the coverage area for a cell (i.e. the radio transmissions for the cell) may be defined by the configuration and operation of an active antenna system (AAS) used to operate the cell. Beamforming is an established technique to change the coverage area of a radio transmission; and is, for example, a flexible way of achieving temporary cell densification in order to enhance system capacity according to need.

Figure 2 shows one example of how the same set of physical antenna elements can be operated to produce different coverage areas A1 to A8 for a radio transmission. For example, the coverage area of a radio transmission can be changed by changing the tilt setting, and/or shifting the bore sight. Figure 2 shows examples of vertical sectorisation VS (A1/A2); horizontal sectorisation HS (A3/A4); and a combination of vertical and horizontal sectorisation VS+HS (A5 to A8).

A cell is identifiable (distinguishable from other cells in the same geographical area) by a unique physical cell identifier (PCI) detected from reference signals broadcast for the cell. A cell may, for example, be replaced by two or more cells, of which at least one will have a PCI different to the replaced cell, such as when switching to operating a plurality of new smaller cells collectively over the coverage area of an old cell, and vice versa. A cell is also identifiable by a E-UTRAN Cell Global Identifier (ECGI), which is a concatenation of Public Land Mobile Network ID (PLMN-ID) and E-UTRAN Cell Identity (ECI), whose exact coding is the responsibility of the PLMN operator.

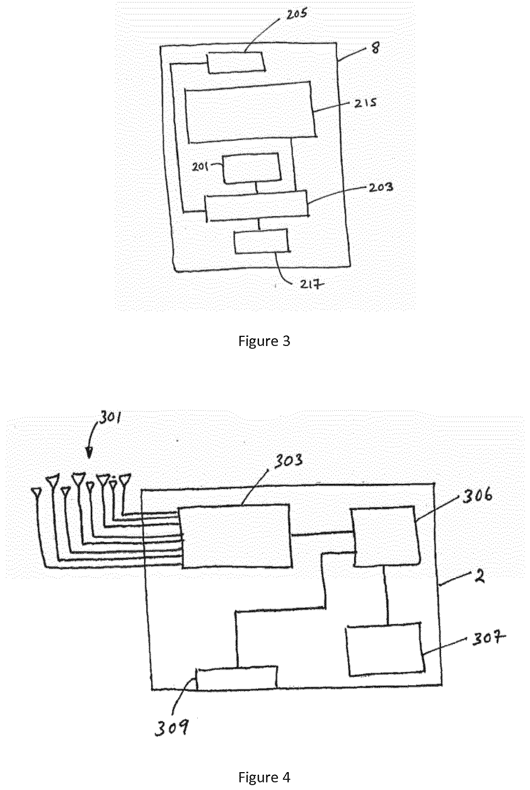

Figure 3 shows a schematic view of an example of user equipment 8 that may be used for communicating with at least the eNBs 2a, 2b of Figure 1 via a wireless interface. The user equipment (UE) 8 may be used for various tasks such as making and receiving phone calls, for receiving and sending data from and to a data network and for experiencing, for example, multimedia or other content.

The UE 8 may be any device capable of at least sending or receiving radio signals to or from at least the eNBs 2 of Figure 1. Non-limiting examples include a mobile station (MS), a portable computer provided with a wireless interface card or other wireless interface facility, personal data assistant (PDA) provided with wireless communication capabilities, or any combinations of these or the like. The UE 8 may communicate via an appropriate radio interface arrangement of the UE 8. The interface arrangement may be provided for example by means of a radio part and associated antenna arrangement 205. The antenna arrangement may be arranged internally or externally to the UE 8, and may include a plurality of antennas capable of operating in a multi-layer transmission scheme.

The UE 8 may be provided with at least one data processing entity 203 and at least one memory or data storage entity 217 for use in tasks it is designed to perform. The data processor 213 and memory 217 may be provided on an appropriate circuit board 219 and/or in chipsets.

The user may control the operation of the UE 8 by means of a suitable user interface such as key pad 201, voice commands, touch sensitive screen or pad, combinations thereof or the like. A display 215, a speaker and a microphone may also be provided. Furthermore, the UE 8 may comprise appropriate connectors (either wired or wireless) to other devices and/or for connecting external accessories, for example hands-free equipment, thereto.

Figure 3 shows an example of a UE including a user interface, but the UE may also be a communication device without any user interface, such as a device that is designed for machine type communications (MTC).

Figure 4 shows an example of apparatus for use at the eN Bs 2a, 2b of Figure 1. The apparatus comprises a radio frequency antenna array 301 configured to receive and transmit radio frequency signals; radio frequency interface circuitry 303 configured to interface the radio frequency signals received and transmitted by the antenna array 301 and the data processor 306. The radio frequency interface circuitry 303 may also be known as a transceiver. The apparatus also comprises an interface 309 via which it can send and receive information to and from one or more other network nodes such as the core network 4 and other eNBs 2. The data processor 306 is configured to process signals from the radio frequency interface circuitry 303, control the radio frequency interface circuitry 303 to generate suitable RF signals to communicate information to the UE 8 via the wireless communications link, and also to exchange information with other network nodes via the interface 309. The memory 307 is used for storing data, parameters and instructions for use by the data processor 306.

It would be appreciated that the apparatus shown in each of figures 3 and 4 described above may comprise further elements which are not directly involved with the embodiments of the invention described hereafter.

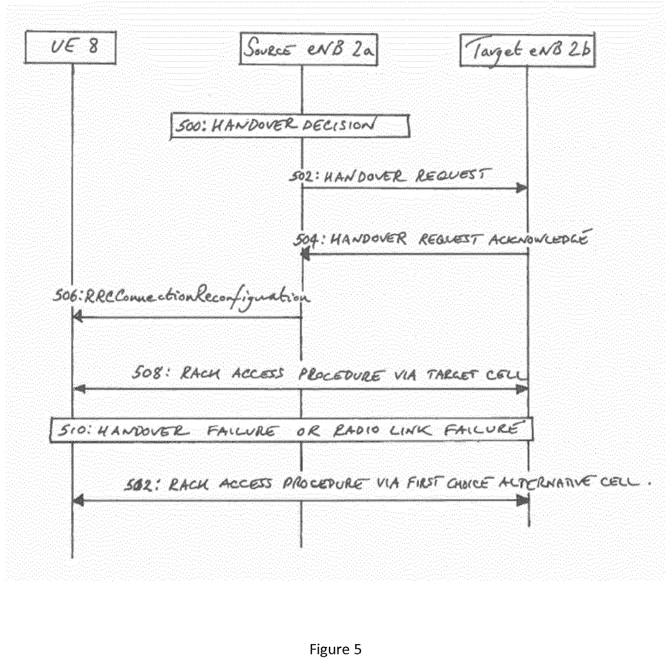

Figures 5 to 8 illustrates an example of operations at a UE and target/source eNBs for the example of a handover of a UE between eNBs 2a, 2b operating under the same mobile management entity (MME) (not shown in Figure 1).

UE 8 continuously makes reference cell signal measurements for all cells it can detect (STEP 800), and may transmit the results of those reference signal measurements to serving eNB 2a (STEP 802) in response to an event such as a reference signal measurement exceeding a certain pre-defined threshold value. Alternatively, the UE 8 may periodically report reference signal measurements to the serving eNB 2a.

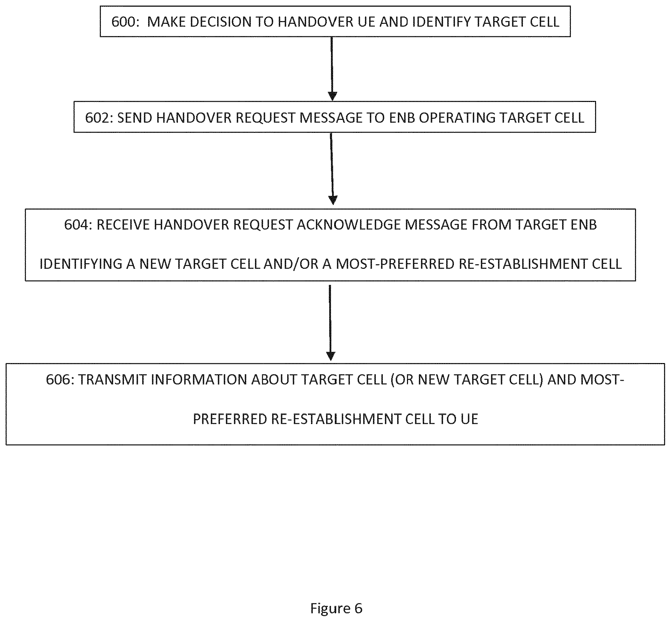

The handover procedure continues by determining at the serving eNodeB (source eNodeB) 2a that the pre-determined conditions for a handover of UE 8 are met, based at least partly on information received from UE 8 about the power at which reference signals for other cells are detected at UE 8; and identifying cell A as a target cell for UE 8 (STEP 500 in Figure 5 and STEP 600 in Figure 6). Source eNB 2a sends out a handover request message for eNB 2b over the X2 interface between the two eNBs (STEP 502 of Figure 5 and STEP 602 of Figure 6). The handover request message identifies cell A as a target cell for UE 8, and includes: UE context information for UE 8, such as: security capabilities; access stratum (AS) security information; and information about each of the current radio access bearers (RABs) for UE, such as quality of service (QoS) parameters and GTP Tunnel information. The handover request message may also identify all the other cells that the source eNB 2a knows to be associated with the target eNB 2b. In more detail, the handover request message may include all ECGIs that the source eNB 2a knows are associated with the target eNB 2b. Each eNB of the network may have this ECGI information for all neighbouring eNBs with which it shares an X2 interface. An eNB may receive this ECGI information during X2-setup or in specific messages such as eNB configuration update information message.

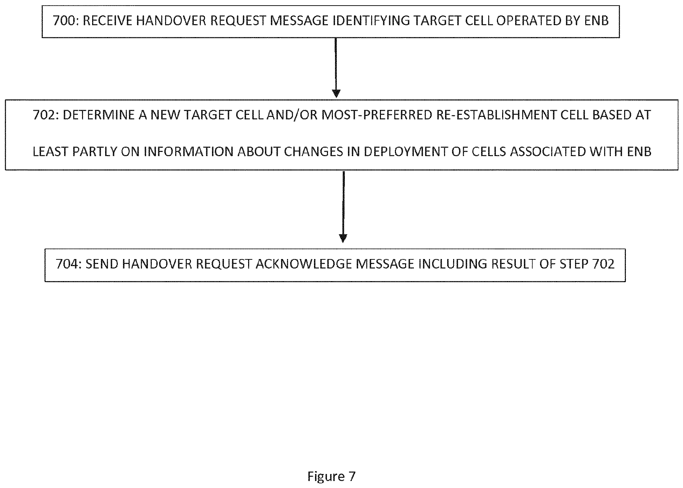

In response to receiving the handover request (STEP 700 of Figure 7), eNB 2b performs admission control, and determines whether it can accept the radio access bearers for UE 8. If the result of the determination is positive, eNB 2b generates a handover request acknowledge message for sending to the source eNB 2a. The handover request acknowledge message includes information about the accepted RABs (such as new uplink and downlink GTP tunnel information for each RAB).

In addition, based on knowledge of planned changes for its own deployment configuration, e.g. eNB 2b knows that cell A is to be replaced in the near-term future by e.g. cells A1 and A2 of Figure 2, and includes information about cells A1 and A2 in the handover request acknowledge message. The information about cells A1 and A2 includes the respective ECGls, PCIs and synchronisation information for those cells. The synchronisation information may include dedicated RACH preambles for an enhanced contention-free in case of a possible re-establishment process. Depending on the timing of the planned replacement of cell A by cells A1/A2, the handover request acknowledge either (i) identifies one of cells A1 and A2 as the most preferred alternative cell (cell to first try for reestablishment in the event that the handover to the target cell fails or the UE experiences a radio link failure shortly after handover), or (ii) identifies the other of cells A1 and A2 as first-choice alternative cell (cell to first try for reestablishment in the event that the handover to the target cell fails or the UE experiences a radio link failure shortly after handover) (STEP 702 of Figure 7). Alternatively, if there is no plan to deactivate cell A, but there is a plan to activate a new cell better suited to UE 8, target eNB 2b may identify the first-choice alternative cell, depending on e.g. the timing of the planned activation of the new cell.

Target eNB 2b conveys the handover request acknowledge message to source eNB 2a (STEP 504 of Figure 5, STEP 604 of Figure 6 and STEP 704 of Figure 7). The handover request acknowledge message may contain a "Target eNB to Source eNB Transparent Container" including the RRC E-UTRA Handover Command message.

If the reestablishment cell identified by the target eNB 2b happens to have a ECGI that was not included in the set of ECGls included in the handover request message from the source eNB to the target eNB, the target eNB rejects the handover request with a message including the ECGI of the cell(s) it has identified as re-establishment cell(s). The source eNB 2a then sends another handover request message to the target eNB 2b including the one or more new ECGls; and the target eNB replies with a handover acknowledgment message.

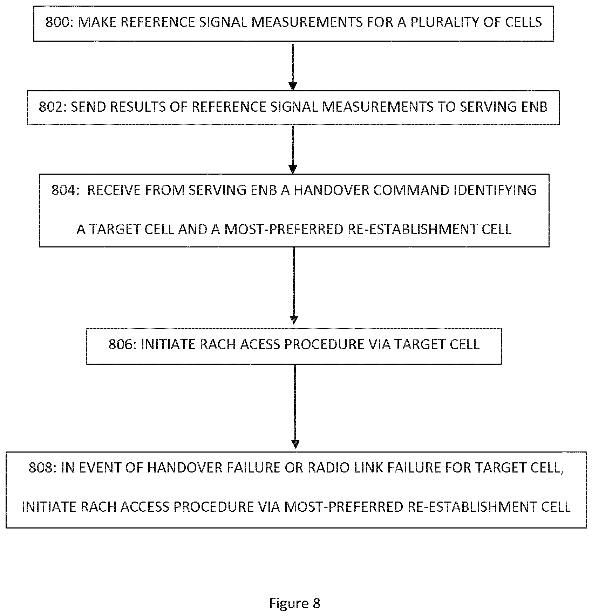

The information included in the handover request acknowledge message is transmitted to the UE via serving cell B in a handover command message (e.g. as mobilityControlinfo in the RRCConnectionReconfiguration message) (STEP 606 of Figure 6 and STEP 802 of Figure 8). UE 8 then starts normal handover procedure with random access channel (RACH) access to establish a connection with the target eNB 2b via the target cell identified in the handover command message from source eNB 2a (STEP 806 of Figure 8). If there happens to be a failure to handover to the target cell (e.g. if UE 8 fails to find the reference signals representing the PCI for the target cell, because the target cell has been deactivated in the meantime), or UE 8 experiences a radio link failure (RLF) soon after a successful handover to the target cell , UE 8 is configured to attempt connection re-establishment via the cell identified as the first-choice alternative cell in the handover command was received from source eNB 2a (STEP 808 of Figure 8). For example, if cell A1 is identified as first-choice alternative cell in the handover command received at UE 8, UE 8 initiates RACH access via cell A1. Cell A1 is also one of the cells identified in the handover request and is prepared for possible re-establishment. Target eNB 2b has already received the UE context information for UE 8 from source eNB 2a, and therefore has the security information necessary for reestablishment of the UE connection via cell A1 without requiring renewal of authentication/authorisation.

In the case that the information provided to UE 8 identifies a plurality of alternative cells, the information about which alternative cell is the first-choice alternative cell can be communicated to the source eNB 2b in different ways. One example involves including in the handover request acknowledge message sent from eNB 2b to source eNB 2a a single list of cells, listed in order of priority, i.e. the target cell being first in the list, and the first-choice alternative cell being second in the list, etc.. Another example involves including in the handover request acknowledge message an additional information element with information about how the alternative cells are ranked in terms of priority for attempting connection reestablishment. A third example involves adding labels to each list entry to identify the respective ranking of the respective cell.

The above-described techniques increase the chance of fast recovery of a connection between a UE and the radio access network without the need for renewal of authorisation/authentication, in, for example, the event of a handover failure caused by a cell deployment change at the eNB operating the target cell. Without the information about which alternative cell is first-choice alternative cell for the UE 8, the UE 8 may take too long to find an alternative cell, leading to delays caused by a switch to an idle state from which a new connection would need to be set up, i.e. with full renewal of authentication/authorisation of the UE8.

Embodiments of the invention are described above for the example of a change in cell deployment configuration at the eNB operating the target cell (i.e. deactivation of the target cell identified in the handover request, or activation of a new cell better suited to the UE 8 without deactivation of the target cell); but the same techniques have more general use in situations where the target eNB has information not available to the source eNB.

Embodiments are described above for an example in which the alternative cells are other cells operated by the target eNB 2b, but one or more of the alternative cells (including the first-choice alternative cell) may be a neighbouring cell operated by a neighbouring eNB for which the target eNB 2a has information via UEs served by the target eNB 2b, and which is prepared for possible connection re-establishment.

The above-described operations may require data processing in the various entities. The data processing may be provided by means of one or more data processors. Similarly various entities described in the above embodiments may be implemented within a single or a plurality of data processing entities and/or data processors. Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

For example the embodiments of the invention may be implemented as a chipset, in other words a series of integrated circuits communicating among each other. The chipset may comprise microprocessors arranged to run code, application specific integrated circuits (ASICs), or programmable digital signal processors for performing the operations described above.

Embodiments of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the modifications explicitly mentioned above, it will be evident to a person skilled in the art that various other modifications of the described embodiment may be made within the scope of the claims.

## Claims

1. A method, comprising: receiving at a second node (2b) a handover request from a first node (2a) identifying a communication device (8) and a target cell for handover of the communication device from the first node, wherein the target cell is associated with said second node; and **characterised by**: determining at the second node, based on deployment configuration changes of the second node, a most preferred re-establishment cell for the handover of the communication device from the first node, wherein the most-preferred re-establishment cell is not identified in the handover request; sending from the second node to the first node a handover request rejection message identifying the most preferred re-establishment cell; and receiving at the second node from the first node a new handover request identifying the most preferred re-establishment cell; wherein the most-preferred re-establishment cell is a cell via which the communication device attempts first the connection reestablishment in the event that the handover of the communication device fails, or in the event of a connection failure after the handover of the communication device.

2. A second node (2b), comprising: means for receiving a handover request from a first node (2a) identifying a communication device (8) and a target cell for handover of the communication device from the first node, wherein the target cell is associated with said second node; and **characterised by**: means for determining, based on deployment configuration changes of the second node, a most preferred re-establishment cell for the handover of the communication device from the first node, wherein the most-preferred re-establishment cell is not identified in the handover request; means for sending to the first node a handover request rejection message identifying the most preferred re-establishment cell; and means for receiving from the first node a new handover request identifying the most preferred re-establishment cell; wherein the most-preferred re-establishment cell is a cell via which the communication device attempts first the connection reestablishment in the event that the handover of the communication device fails, or in the event of a connection failure after the handover of the communication device.

3. A computer program product comprising program code means which when loaded into a computer for a second node controls the second node to perform the method of claim 1.

## Patentansprüche

1. Verfahren, das Folgendes umfasst: Empfangen einer Übergabeanforderung an einem zweiten Knoten (2b) von einem ersten Knoten (2a), der eine Kommunikationsvorrichtung (8) und eine Zielzelle für eine Übergabe der Kommunikationsvorrichtung vom ersten Knoten identifiziert, wobei die Zielzelle mit dem zweiten Knoten verknüpft ist; und **gekennzeichnet durch**: Bestimmen einer bevorzugtesten Wiederherstellungszelle für die Übergabe der Kommunikationsvorrichtung vom ersten Knoten am zweiten Knoten auf Basis von Einsatzauslegungsänderungen des zweiten Knotens, wobei die bevorzugteste Wiederherstellungszelle in der Übergabeanforderung nicht identifiziert ist; Senden einer Übergabeanforderungszurückweisungsnachricht, die die bevorzugteste Wiederherstellungszelle identifiziert, vom zweiten Knoten an den ersten Knoten; und Empfangen einer neuen Übergabeanforderung, die die bevorzugteste Wiederherstellungszelle identifiziert, am zweiten Knoten vom ersten Knoten; wobei die bevorzugteste Wiederherstellungszelle eine Zelle ist, via die die Kommunikationsvorrichtung in dem Fall, in dem die Übergabe der Kommunikationsvorrichtung fehlschlägt, oder in dem Fall eines Verbindungsausfalls nach der Übergabe der Kommunikationsvorrichtung zuerst die Verbindungswiederherstellung versucht.

2. Zweiter Knoten (2b) der Folgendes umfasst: Mittel zum Empfangen einer Übergabeanforderung von einem ersten Knoten (2a), der eine Kommunikationsvorrichtung (8) und eine Zielzelle für eine Übergabe der Kommunikationsvorrichtung vom ersten Knoten identifiziert, wobei die Zielzelle mit dem zweiten Knoten verknüpft ist; und **gekennzeichnet durch**: Mittel zum Bestimmen einer bevorzugtesten Wiederherstellungszelle für die Übergabe der Kommunikationsvorrichtung vom ersten Knoten auf Basis von Einsatzauslegungsänderungen des zweiten Knotens, wobei die bevorzugteste Wiederherstellungszelle in der Übergabeanforderung nicht identifiziert ist; Mittel zum Senden einer Übergabeanforderungszurückweisungsnachricht, die die bevorzugteste Wiederherstellungszelle identifiziert, an den ersten Knoten; und Mittel zum Empfangen einer neuen Übergabeanforderung, die die bevorzugteste Wiederherstellungszelle identifiziert, vom ersten Knoten; wobei die bevorzugteste Wiederherstellungszelle eine Zelle ist, via die die Kommunikationsvorrichtung in dem Fall, in dem die Übergabe der Kommunikationsvorrichtung fehlschlägt, oder in dem Fall eines Verbindungsausfalls nach der Übergabe der Kommunikationsvorrichtung zuerst die Verbindungswiederherstellung versucht.

3. Computerprogrammprodukt, das Programmcodemittel umfasst, die, wenn sie in einen Computer für einen zweiten Knoten geladen werden, den zweiten Knoten zum Durchführen des Verfahrens nach Anspruch 1 steuern.

## Revendications

1. Procédé, comprenant : la réception, au niveau d'un deuxième noeud (2b), d'une demande de transfert cellulaire à partir d'un premier noeud (2a) identifiant un dispositif de communication (8) et une cellule cible pour le transfert cellulaire du dispositif de communication à partir du premier noeud, dans lequel la cellule cible est associée audit deuxième noeud ; et **caractérisé par** : la détermination, au niveau du deuxième noeud, sur la base de changements de configuration de déploiement du deuxième noeud, d'une cellule de rétablissement idéale pour le transfert cellulaire du dispositif de communication à partir du premier noeud, dans lequel la cellule de rétablissement idéale n'est pas identifiée dans la demande de transfert cellulaire ; l'envoi, du deuxième noeud au premier noeud, d'un message de rejet de demande de transfert cellulaire identifiant la cellule de rétablissement idéale ; et la réception, au niveau du deuxième noeud, à partir du premier noeud, d'une nouvelle demande de transfert cellulaire identifiant la cellule de rétablissement idéale ; dans lequel la cellule de rétablissement idéale est une cellule par laquelle le dispositif de communication tente d'abord de rétablir la connexion en cas d'échec du transfert cellulaire du dispositif de communication, ou en cas d'échec de la connexion après le transfert cellulaire du dispositif de communication.

2. Deuxième noeud (2b), comprenant : des moyens pour recevoir une demande de transfert cellulaire à partir d'un premier noeud (2a) identifiant un dispositif de communication (8) et une cellule cible pour le transfert cellulaire du dispositif de communication à partir du premier noeud, dans lequel la cellule cible est associée audit deuxième noeud ; et **caractérisé par** : des moyens pour déterminer, sur la base de changements de configuration de déploiement du deuxième noeud, une cellule de rétablissement idéale pour le transfert cellulaire du dispositif de communication à partir du premier noeud, dans lequel la cellule de rétablissement idéale n'est pas identifiée dans la demande de transfert cellulaire ; des moyens pour envoyer au premier noeud un message de rejet de demande de transfert cellulaire identifiant la cellule de rétablissement idéale ; et des moyens pour recevoir du premier noeud une nouvelle demande de transfert cellulaire identifiant la cellule de rétablissement idéale ; dans lequel la cellule de rétablissement idéale est une cellule par laquelle le dispositif de communication tente d'abord de rétablir la connexion en cas d'échec du transfert cellulaire du dispositif de communication, ou en cas d'échec de la connexion après le transfert cellulaire du dispositif de communication.

3. Produit de programme informatique comprenant des moyens de code de programme qui, lorsqu'ils sont chargés dans un ordinateur pour un deuxième noeud, commandent le deuxième noeud pour réaliser le procédé de la revendication 1.
